(19) Europäisches Patentamt
European Patent Office
Office européen des brevets

(11) **EP 2 958 101 A1**

(12) **EUROPEAN PATENT APPLICATION**

(43) Date of publication:
**23.12.2015 Bulletin 2015/52**

(51) Int Cl.:
**G09G 3/20** (2006.01)   *G06T 5/00* (2006.01)
**G09G 5/00** (2006.01)

(21) Application number: **14305961.6**

(22) Date of filing: **20.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Bordes, Philippe**
**35576 Cesson-Sévigné (FR)**

• **Turkan, Mehmet**
**35576 Cesson-Sévigné (FR)**
• **Andrivon, Pierre**
**35576 Cesson-Sévigné (FR)**

(74) Representative: **Huchet, Anne**
**Technicolor**
**1-5 rue Jeanne d'Arc**
**92130 Issy-Les-Moulineaux (FR)**

(54) **Methods and apparatus for displaying HDR image on LDR screen**

(57)   Methods and apparatus of displaying a High Dynamic Range (HDR) image on a Low Dynamic Range (LDR) screen are suggested. The suggested method comprises: performing bit conversion on the HDR image to obtain a LDR image; up-sampling the LDR image to obtain an up-sampled LDR image; dithering the up-sampled LDR image based on the HDR image; and displaying the dithered up-sampled LDR image on the LDR screen.

Fig. 5

EP 2 958 101 A1

**Description**

**TECHNICAL FIELD**

The present disclosure relates to the technical field of image processing and display, and in particular to methods and apparatus for displaying a High Dynamic Range (HDR) (or Extended Dynamic Range (EDR), which is exchangeable with respect to HDR) image on a Low Dynamic Range (LDR) screen, especially a large LDR screen having a size larger than that of the HDR image.

**BACKGROUND**

Hereinafter, the present disclosure is described with reference to embodiments shown in the attached drawings. However, it is to be understood that those descriptions are just provided for illustrative purpose, rather than limiting the present disclosure. Further, in the following, descriptions of known structures and techniques are omitted so as not to unnecessarily obscure the concept of the present disclosure. Throughout the drawings, solid lines are used to denote compulsory elements or steps, while dotted lines are used to denote optional elements or steps.

The standard High Efficiency Video Coding (HEVC) has adopted a video profile supporting 10-bitss as input video. This format tends to be adopted by many other standardization groups such as Digital Video Broadcasting-Ultra High Definition Television (DVB-UHDTV) and applications. However, most of the existing displays have anticipated the market trend of large images (e.g., 4K) but not the increase of video bit-depth beyond the traditional 8-bits format.

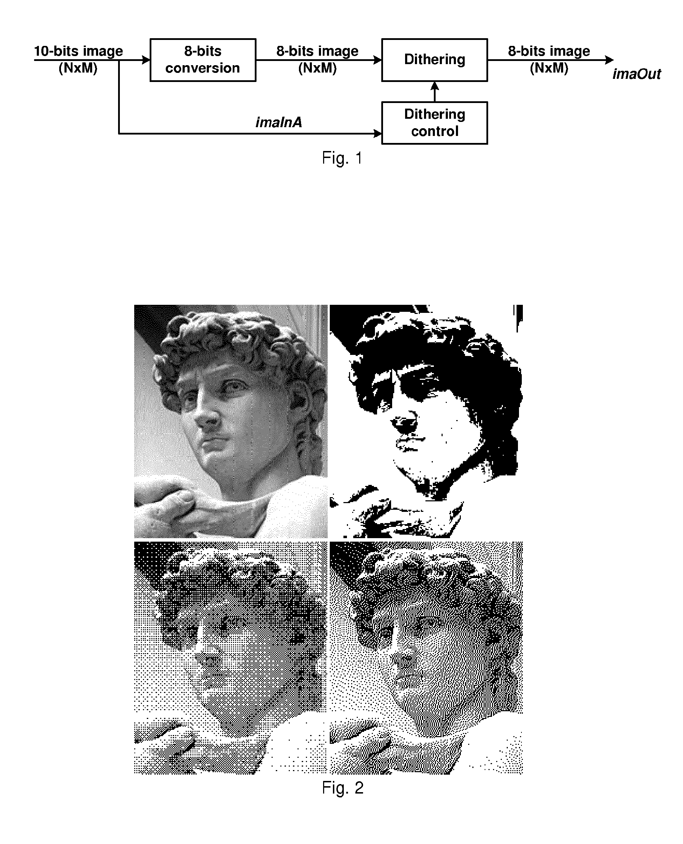

Traditionally, to display an input image on a screen with a lower bit-depth than that of the input image, the dithering technique is used, as shown in Fig. 1. In the dithering technique, colors that are not available in the palette are approximated by a diffusion of colored pixels from within the available palette (lower bit-depth available color palette). The human eye perceives the diffusion as a mixture of the colors within it. Dithered images, particularly those with relatively few colors, can often be distinguished by a characteristic graininess or speckled appearance.

For example, considering an original image of *N* bits (*imaInA*) converted to an output image of *M* bits (*imaOut*), with *n=(N-M),* the dithering process can be modelled locally (assuming a region $R(p_A)$ around a current pixel $p_A$ of the original image) as an error minimization problem with 2 terms basically Expression (2), where the first term measures the distance *D* (e.g., L2 norm) of the converted sample (n right shifted) plus the dither pattern (*dither($p_A$)*) (Expression (1)) to the original $p_A$ sample value, and the second term evaluate the visual artefact generated by the dithering process.

$$\mathrm{imaOut}(p_A) = \left( \left( \left( p_A + (n-1) \right) \sqcup \ n \right) \sqcup \ n \right) + \mathrm{dither}(p_A) \qquad \text{Expression (1)}$$

$$\min \sum\nolimits_{p_A \in R(p_A)} D(\mathrm{imaOut}(p_A) - p_A) + \lambda \times \mathrm{VisualCost}(p_A) \qquad \text{Expression (2)}$$

Fig. 2 illustrates a comparison diagram of four images, including an original image and three images obtained by applying three different dithering methods on the original image. The first image is the original image without applying dithering. The second to the fourth image are rendered by applying Thresholding dithering (also average dithering), Ordered dithering, and Floyd-Steinberg dithering.

As illustrated in Fig. 2, Floyd-Steinberg dithering is one of the most efficient existing dithering algorithms. To be specific, Floyd-Steinberg dithering is a one pass image algorithm, where rounding errors of samples are distributed to neighboring pixels not yet visited. The Floyd-Steinberg error diffusion pattern (Expression (3)) has been chosen carefully so that it produces a checkerboard pattern in areas with intensity of ½, it is fairly easy to calculate when the division by 16 is replaced by shifts and it gives subjectively good results in general.

$$\frac{1}{16}\begin{bmatrix} & x & 7 \\ 3 & 5 & 1 \end{bmatrix} \qquad \text{Expression (3)}$$

However, there is no guarantee that the dithering algorithm would not generate banding artefacts, while it is one of the main reasons why the video producers (e.g., broadcasters) have chosen to adopt a higher bit-depth (e.g., 10-bitss) in new standards rather than to keep the former 8-bits format.

Moreover, new video formats representing HDR than former LDR ones such as rec.709 are appearing. They allow to represent wider contrast (generally expressed in nits) than it was possible with previous video formats. It should be noted that Nit is a unit of visible-light intensity, commonly used to specify the brightness liquid crystal display computer display. One nit is equivalent to one candela per square meter.

When displayed on a HDR screen, the (augmented contrast ratio) visual experience is mainly characterized in sharper edges, in particular where the contrast ratio is significant. Traditional displays are not capable of rendering such HDR content characterized in several thousands of nits.

The traditional technique used to display a HDR image or video on a LDR screen is to use globally or locally adapted tone mapping algorithms. In that case, the reduction of the contrast ratio removes the HDR visual effect in general.

## SUMMARY

The present invention disclosure is provided to solve at least one problem of the prior art. The present disclosure will be described in detail with reference to exemplary embodiments. However, the present disclosure is not limited to the embodiments.

According to a first aspect of the present invention disclosure, there is provided a method for displaying a HDR image on a LDR screen. The HDR image has a size of Nx M pixels and a bit-depth of n bits, and the LDR screen has a size of $P \times Q$ pixels and a bit-depth of m bits, wherein all of N, M, P, Q, n, and m are positive integers, and P>N, Q≥M, and n>m. The method comprises: up-sampling the HDR image to obtain an up-sampled HDR image having a size of $P \times Q$ pixels and a bit-depth of n bits; performing bit conversion on the up-sampled HDR image to obtain a LDR image having a size of $P \times Q$ pixels and a bit-depth of m bits; dithering the LDR image based on the HDR image having a size of $N \times M$ pixels and a bit-depth of n bits; and displaying the dithered LDR image on the LDR screen.

In an embodiment, the up-sampling comprises: analyzing local signal characteristics of $S \times T$ pixels in the HDR image, S and T being positive integers, and S≤N and T≤M; selecting one or more up-sampling parameters according to the local signal characteristics; and up-sampling the LDR image by using the selected one or more up-sampling parameters.

In another embodiment, the bit conversion is performed by using a tone mapping algorithm.

In still another embodiment, the local signal characteristics include a contrast ratio of the HDR image.

In yet another embodiment, the up-sampling is performed by an up-sampling filter or a sharpen filter.

According to a second aspect of the present invention disclosure, there is provided a method for displaying a HDR image on a LDR screen. The HDR image has a size of N xM pixels and a bit-depth of n bits, and the LDR screen has a size of $P \times Q$ pixels and a bit-depth of m bits, wherein all of N, M, P, Q, n, and m are positive integers, and P>N, Q≥M, and n>m. The method comprises: performing bit conversion on the HDR image to obtain a LDR image having a size of $N \times M$ pixels and a bit-depth of m bits; up-sampling the LDR image to obtain an up-sampled LDR image having a size of $P \times Q$ pixels and a bit-depth of m bits; dithering the up-sampled LDR image based on the HDR image having a size of $N \times M$ pixels and a bit-depth of n bits; and displaying the dithered up-sampled LDR image on the LDR screen.

According to a third aspect of the present invention disclosure, there is provided a method for displaying a HDR image on a LDR screen. The HDR image has a size of Nx M pixels and a bit-depth of n bits, and the LDR screen has a size of $P \times Q$ pixels and a bit-depth of m bits, wherein all of N, M, P, Q, n, and m are positive integers, and P>N, Q≥M, and n>m. The method comprises: up-sampling the HDR image to obtain an up-sampled HDR image having a size of $P \times Q$ pixels and a bit-depth of n bits; performing bit conversion on the up-sampled HDR image to obtain a LDR image having a size of $P \times Q$ pixels and a bit-depth of m bits; and displaying the LDR image on the LDR screen. The up-sampling comprises: analyzing local signal characteristics of $S \times T$ pixels in the HDR image, S and T being positive integers, and S≤N and T≤M; selecting one or more up-sampling parameters according to the local signal characteristics; and up-sampling the HDR image by using the selected one or more up-sampling parameters.

According to a fourth aspect of the present invention disclosure, there is provided a method for displaying a HDR image on a LDR screen. The HDR image has a size of Nx M pixels and a bit-depth of n bits, and the LDR screen has a size of $P \times Q$ pixels and a bit-depth of m bits, wherein all of N, M, P, Q, n, and m are positive integers, and P>N, Q≥M, and n>m. The method comprises: performing bit conversion on the HDR image to obtain a LDR image having a size of N×M pixels and a bit-depth of m bits; up-sampling the LDR image to obtain an up-sampled LDR image having a size of P×Q pixels and a bit-depth of m bits; and displaying the up-sampled LDR image on the LDR screen. The up-sampling comprises: analyzing local signal characteristics of S×T pixels in the HDR image, S and T being positive integers, and S≤N and T≤M; selecting one or more up-sampling parameters according to the local signal characteristics; and up-sampling the LDR image by using the selected one or more up-sampling parameters.

According to a fifth aspect of the present invention disclosure, there is provided an apparatus for displaying a HDR image on a LDR screen. The HDR image has a size of N xM pixels and a bit-depth of n bits, and the LDR screen has a size of P×Q pixels and a bit-depth of m bits, wherein all of N, M, P, Q, n, and m are positive integers, and P>N, Q≥M, and n>m. The apparatus comprises: an up-sampling unit configured to up-sample the HDR image to obtain an up-sampled HDR image having a size of P×Q pixels and a bit-depth of n bits; a bit conversion unit configured to perform bit conversion on the up-sampled HDR image to obtain a LDR image having a size of P×Q pixels and a bit-depth of m bits; a dithering unit configured to dither the LDR image based on the HDR image having a size of N×M pixels and a bit-depth of n bits; and a displaying unit configured to display the dithered LDR image on the LDR screen.

According to a sixth aspect of the present invention disclosure, there is provided an apparatus for displaying a HDR image on a LDR screen. The HDR image has a size of N xM pixels and a bit-depth of n bits, and the LDR screen has a size of P×Q pixels and a bit-depth of m bits, wherein all of N, M, P, Q, n, and m are positive integers, and P>N, Q≥M, and n>m. The apparatus comprises: a bit conversion unit configured to perform bit conversion on the HDR image to obtain a LDR image having a size of N×M pixels and a bit-depth of m bits; an up-sampling unit configured to up-sample the LDR image to obtain an up-sampled LDR image having a size of P×Q pixels and a bit-depth of m bits; a dithering unit configured to dither the up-sampled LDR image based on the HDR image having a size of N×M pixels and a bit-depth of n bits; and a displaying unit configured to display the dithered up-sampled LDR image on the LDR screen.

According to a seventh aspect of the present invention disclosure, there is provided an apparatus for displaying a HDR image on a LDR screen. The HDR image has a size of N×M pixels and a bit-depth of n bits, and the LDR screen has a size of P×Q pixels and a bit-depth of m bits, wherein all of N, M, P, Q, n, and m are positive integers, and P>N, Q≥M, and n>m. The apparatus comprises: an up-sampling unit configured to up-sample the HDR image to obtain an up-sampled HDR image having a size of P×Q pixels and a bit-depth of n bits; a bit conversion unit configured to perform bit conversion on the up-sampled HDR image to obtain a LDR image having a size of P×Q pixels and a bit-depth of m bits; and a displaying unit configured to display the LDR image on the LDR screen. The up-sampling unit is configured to: analyze local signal characteristics of S×T pixels in the HDR image, S and T being positive integers, and S≤N and T≤M; select one or more up-sampling parameters according to the local signal characteristics; and up-sample the HDR image by using the selected one or more up-sampling parameters.

According to a eighth aspect of the present invention disclosure, there is provided an apparatus for displaying a HDR image on a LDR screen. The HDR image has a size of N×M pixels and a bit-depth of n bits, and the LDR screen has a size of P×Q pixels and a bit-depth of m bits, wherein all of N, M, P, Q, n, and m are positive integers, and P>N, Q≥M, and n>m. The apparatus comprises: a bit conversion unit configured to perform bit conversion on the HDR image to obtain a LDR image having a size of N×M pixels and a bit-depth of m bits; an up-sampling unit configured to up-sample the LDR image to obtain an up-sampled LDR image having a size of P×Q pixels and a bit-depth of m bits; and a displaying unit configured to display the up-sampled LDR image on the LDR screen. The up-sampling unit is configured to: analyze local signal characteristics of S×T pixels in the HDR image, S and T being positive integers, and S≤N and T≤M; select one or more up-sampling parameters according to the local signal characteristics; and up-sample the LDR image by using the selected one or more up-sampling parameters.

By using the methods and apparatus according to the first to eighth aspects of the present disclosure, the present invention disclosure allows to display a high bit-depth image on a low bit-depth screen, thereby enabling displaying HDR images on LDR screens.

## BRIEF DESCRIPTION OF THE DRAWINGS

The above and other objects, features, and advantages of the present disclosure will become apparent from the following descriptions on embodiments of the present disclosure with reference to the drawings, in which:

Fig. 1 is a diagram illustrating a typical dithering process;

Fig. 2 is a comparison diagram of an original image and three images obtained by applying three different dithering methods on the original image;

Fig. 3 shows a flowchart of a method 300 for displaying a HDR image on a large LDR screen according to a first embodiment of the present disclosure;

Fig. 4 schematically illustrates an example procedure of the method 300 according to the first embodiment of the present disclosure;

Fig. 5 shows a flowchart of a method 500 for displaying a HDR image on a large LDR screen according to a second embodiment of the present disclosure;

Fig. 6 schematically illustrates an example procedure of the method 500 according to the second embodiment of the present disclosure;

Fig. 7 shows a flowchart of a method 700 for displaying a HDR image on a large LDR screen according to a third embodiment of the present disclosure;

Fig. 8 schematically illustrates an example procedure of the method 700 according to the third embodiment of the present disclosure;

Fig. 9 shows a flowchart of a method 900 for displaying a HDR image on a large LDR screen according to a fourth embodiment of the present disclosure;

Fig. 10 schematically illustrates an example procedure of the method 900 according to the fourth embodiment of the present disclosure; and

Fig. 11 is a schematic block diagram of an apparatus 1100 for displaying a HDR image on a LDR screen according to some embodiments of the present disclosure.

## DETAILED DESCRIPTION OF THE PREFERRED EMBODIMENTS

Hereinafter, the present disclosure is described with reference to embodiments shown in the attached drawings. However, it is to be understood that those descriptions are just provided for illustrative purpose, rather than limiting the present disclosure. Further, in the following, descriptions of known structures and techniques are omitted so as not to unnecessarily obscure the concept of the present disclosure.

For the purposes of describing the present disclosure as well as the prior art, the terms low bit depth and high bit depth are used herein to characterize HDR and LDR, respectively. These terms are used to define two different levels of bit depth definition. High bit depth is characterized in that it is at a higher bit depth than the low bit depth and, therefore, is a relative term. For purposes of discussion and illustration, a low bit depth is presumed to be 8 bits, while a high bit depth is presumed to be 10 bits. Due to the relative nature of these terms low bit depth and high bit depth, it is easily seen that the requirement here is that the low bit depth is less than the high bit depth, otherwise the terms are arbitrary. Thus, for example, the low bit depth may be 4 bit, 6 bit, or for that matter 12 bit, as the only requirement is that the high bit depth envisioned is greater than that of the low bit depth. Therefore, if it is presumed that a bit depth of 12 bits is defined as the low bit depth, then high bit depth may be considered 14 bits, 16 bits, or any other bit depth greater than 12. Here, where discussion and illustration of the present disclosure presumes a low bit depth is equal to 8 bits, the requirement for a high bit depth would be anything greater than 8 bits (10 bits are presumed here for the discussion, but could easily encompass a bit depth of 12 bits, 14 bits, or any other bit depth greater than 8). Hence, it is to be appreciated that while one or more embodiments of the present disclosure involve the use of a 10-bitss picture as an example for high bit depth, the present disclosure is not limited to the same and, thus, use of the present disclosure involving high bit depth can take on other values (than 10) that are greater than eight including, but not limited to, 12 bit, 14 bit, and so forth.

Also, as used herein, the word "image" refers to a still image or a picture from a video sequence.

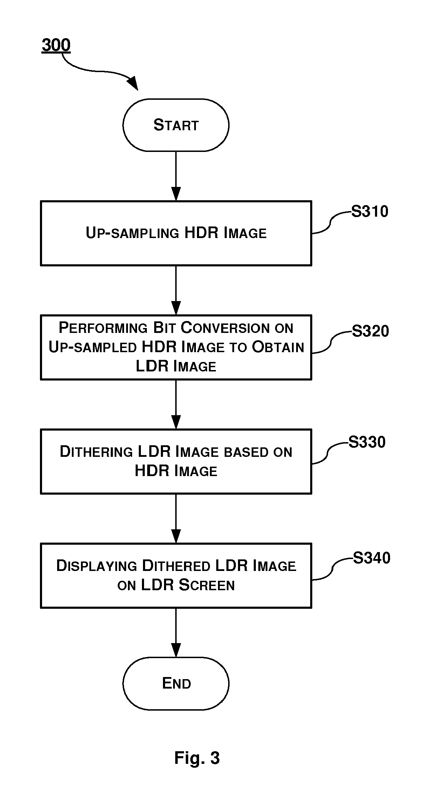

Fig. 3 shows a flowchart of a method 300 for displaying a HDR image on a large LDR screen according to a first embodiment of the present disclosure. The HDR image has a size of N$\times$M pixels and a bit-depth of n bits. The LDR screen has a size of P$\times$Q pixels and a bit-depth of m bits. All of N, M, P, Q, n, and m are positive integers, and P>N, Q>M, and n>m. Hence, it is to be appreciated that the large screen is a relative term here, and the only requirement is that either of horizontal and vertical pixels of the screen is larger than a corresponding one of a target image to be displayed on the screen.

At step S310, the HDR image is up-sampled to obtain an up-sampled HDR image having a size of P$\times$Q pixels and a bit-depth of n bits. For example, the up-sampling may be to transform a resolution of the HDR image to that of the large LDR screen.

Optionally, the up-sampling in step S310 may include: analyzing local signal characteristics of S$\times$T pixels in the HDR image, S and T being positive integers, and S$\leq$N and T$\leq$M; selecting one or more up-sampling parameters according to the local signal characteristics; and up-sampling the HDR image by using the selected one or more up-sampling parameters. For example, the local signal characteristics may include a contrast ratio of the HDR image.

The up-sampling in step S310 may be performed by an up-sampling fitter. The up-sampling filter includes a bilateral filter and various existing filters capable of achieving up-sampling.

Parameters used by the up-sampling filter may be locally adapted according to local signal characteristics of the HDR image, e.g., a contrast ratio of the HDR image.

For example, as described in J.Kopf, M.F.Cohen, D.Lischinski, M.Uyttendaele, "Joint BilateralUpsampling,"ACM Transactions on Graphics (Proceedings of SIGGRAPH 2007), August 2007, in case of up-sampling by using a bilateral filter (see Expression (4) below), both a spatial (or domain) filter kernel g() (such as a Gaussian centered) and a range filter t() are used. With such non-linear filtering, edges are preserved since the bilateral filter f •g takes smaller values as the range distance and/or the spatial distance increases. One can choose the functions g and f to preserve less or more the edges.

$$f(p) = \frac{1}{k} \sum_{q \in \Omega} t(I(q)) \times g(p - q) \qquad \text{Expression (4)}$$

Alternatively, the up-sampling in step S310 may be further performed by a sharpen fitter. The sharpen filter sharpens an image by enhancing color contrast around edges in the image. Such a filter may exaggerate the light and dark edges of the transition improving sharpness by increasing acutance (how quickly image information transitions at an edge).

At step S320, the up-sampled HDR image is bit-converted to a LDR image having a size of $P \times Q$ pixels and a bit-depth of m bits. Here, various proper techniques such as globally or locally adapted tone mapping algorithms may be applied in the bit-conversion.

At step S330, the LDR image is dithered based on the HDR image having a size of $N \times M$ pixels and a bit-depth of n bits.

The dithering here considers the original image, i.e., the HDR image having a size of $N \times M$ pixels and a bit-depth of n bits. The dithering may employ various existing dithering algorithms such as Thresholding dithering, Ordered dithering, Floyd-Steinberg dithering, etc.

At step S340, the dithered LDR image is displayed on the LDR screen.

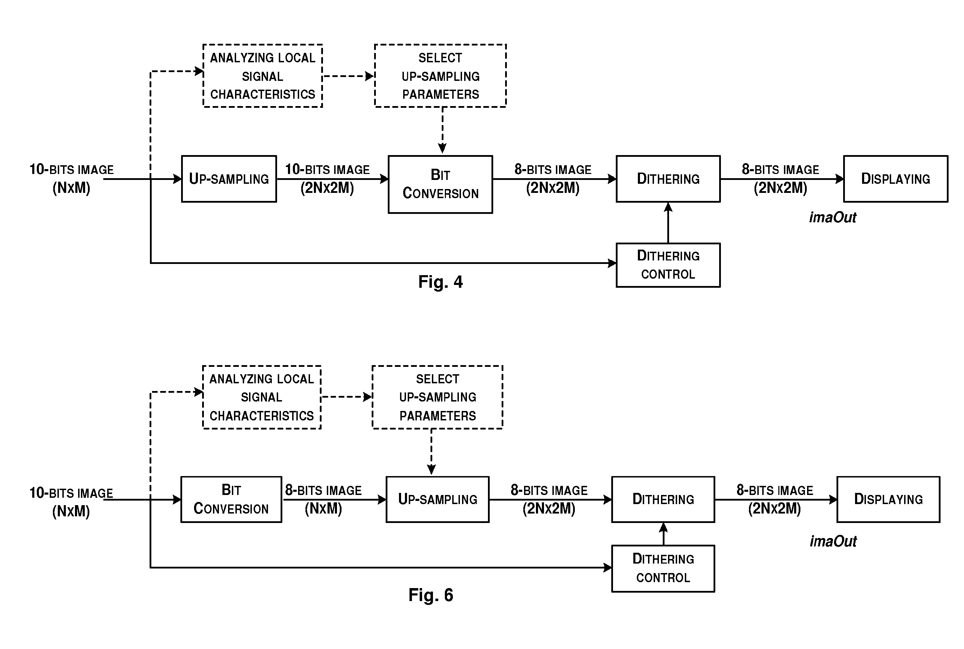

Fig. 4 schematically illustrates an example procedure of the method 300 according to the first embodiment of the present disclosure.

In this example, although the HDR image and the large LDR screen are described as a 10-bitss image having $N \times M$ pixels and a 8-bits screen having 2Nx2M pixels, respectively, it will be appreciated that the present disclosure is not limited to this and various other formats of images and screens are applicable.

As shown in Fig. 4, the 10-bitss image having $N \times M$ pixels is firstly up-sampled to a 10-bitss image having 2Nx2M pixels. Then, the 10-bitss image having 2Nx2M pixels is bit-converted to a 8-bits image having 2Nx2M pixels. The 8-bits image having 2Nx2M pixels is then dithered by considering the 10-bitss image having $N \times M$ pixels (i.e., the original image), and thereafter displayed on the LDR screen.

In this example, the original image is considered in the dithering. For example, an additional term may be added in the above Expression (2):

$$\min \sum_{p_A \in R(p_A)} D(\downarrow \text{imaOut}(p_A) - p_B) + \alpha \times D(\text{imaOut}(p_A) - p_A) + \lambda \times \text{VisualCost}(p_A)$$

$$\text{Expression (5)}$$

In the expression (5), $\downarrow$ is a down-sampling operator, and (, ) are Lagrangian multipliers.

In an implementation, the dithering may only consider the original image. For example, $\alpha$ and/or $\lambda$ can be set to zero. Setting $\alpha$ to zero allows to speed-up calculation in the dithering while maintaining the original bit-depth accuracy distribution.

In another implementation, the term VisualCost($p_A$) may be replaced by VisualCost($\downarrow$imaOut($p_A$)), which means the visual artefacts measurement is performed at the original down-sampled resolution. It should be noted that, depending on the viewing conditions, assessing the visual artefacts at original down-sampled resolution is sufficient (in particular if the viewing distance is above a given threshold, what has been reported in some studies for 4K displays).

In still another implementation, a pattern size of the dithering (i.e., a size of the region $R(p_A)$) corresponds to the relative up-sampling ratio between an original image size and a screen rendering size, e.g., 2x2 if performing up-sampling by factor of 2 in both directions (i.e., horizontal pixels and vertical pixels are both up-sampled by a factor of 2).

As denoted by dotted lines in Fig. 4, the up-sampling may be controlled by locally adapting up-sampling parameters. For example, this may be done by analyzing local signal characteristics of $S \times T$ pixels (S and T are positive integers, and $S \leq N$ and $T \leq M$) in the HDR image, selecting one or more up-sampling parameters according to the local signal characteristics, and performing the up-sampling based on the selected on or more up-sampling parameters.

One major advantage with the method 300 is to allow to display a high bit-depth image on a low bit-depth screen with a large size, thereby enabling displaying HDR images on large LDR screens.

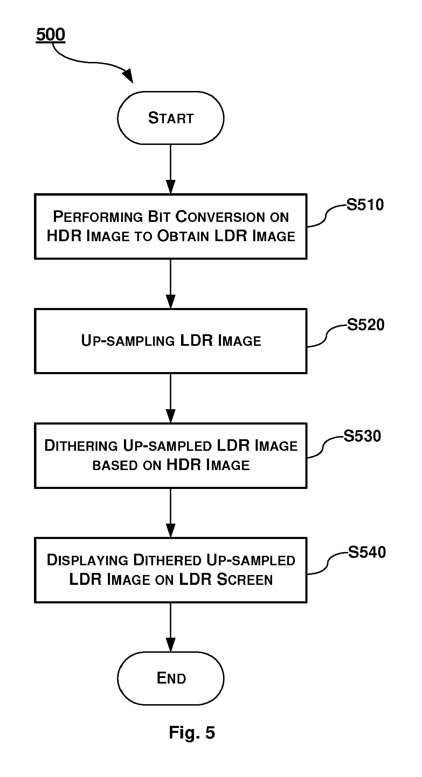

Fig. 5 shows a flowchart of a method 500 for displaying a HDR image on a large LDR screen according to a second embodiment of the present disclosure. The HDR image has a size of $N \times M$ pixels and a bit-depth of n bits. The LDR screen has a size of $P \times Q$ pixels and a bit-depth of m bits. All of N, M, P, Q, n, and m are positive integers, and P>N, Q≥M, and n>m.

At step S51 0, bit conversion is performed on the HDR image to obtain a LDR image having a size of $N \times M$ pixels and a bit-depth of m bits.

At step S520, the LDR image is up-sampled to obtain an up-sampled LDR image having a size of $P \times Q$ pixels and a bit-depth of m bits.

At step S530, the up-sampled LDR image is dithered based on the HDR image having a size of $N \times M$ pixels and a bit-depth of n bits.

At step S540, the dithered up-sampled LDR image is displayed on the LDR screen.

The method 500 mainly differs from the method 300 in that the method 500 firstly performs the bit conversion and then the up-sampling, while it is firstly the up-sampling and then the bit conversion in the method 300. That is, step S510 corresponds to step S320, and the step S520 corresponds to the step S310. Steps 530 and S540 correspond to steps S330 and S340, respectively. In this case, the detailed implementations of steps S510-540 will be similar to those depicted with reference to Fig. 3, and thus will be omitted here for the sake of brevity.

Fig. 6 schematically illustrates an example procedure of the method 500 according to the second embodiment of the present disclosure.

In this example, although the HDR image and the large LDR screen are described as a 10-bits image having $N \times M$ pixels and a 8-bits screen having 2Nx2M pixels, respectively, it will be appreciated that the present disclosure is not limited to this and various other formats of images and screens are applicable.

As shown in Fig. 6, the 10-bits image having $N \times M$ pixels is firstly bit-converted to a 8-bits image having $N \times M$ pixels and then up-sampled to a 8-bits image having 2Nx2M pixels. The 8-bits image having 2Nx2M pixels is then dithered by considering the 10-bits image having $N \times M$ pixels (i.e., the original image), and thereafter displayed on the LDR screen.

Fig. 6 differs from Fig. 4 mainly in swapping bit conversion with up-sampling. So, the detailed implementations described with reference to Fig. 4 may be similarly applied to Fig. 6.

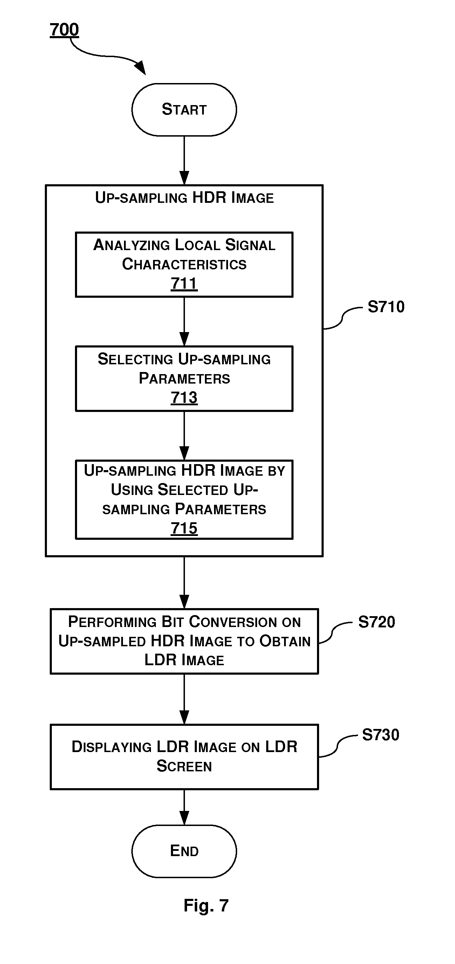

Fig. 7 shows a flowchart of a method 700 for displaying a HDR image on a large LDR screen according to a third embodiment of the present disclosure. The HDR image has a size of $N \times M$ pixels and a bit-depth of n bits. The LDR screen has a size of $P \times Q$ pixels and a bit-depth of m bits. All of N, M, P, Q, n, and m are positive integers, and P>N, Q≥M, and n>m.

At step S710, the HDR image is up-sampled to obtain an up-sampled HDR image having a size of $P \times Q$ pixels and a bit-depth of n bits. This step is implemented by three sub-steps, i.e., step S711, S 713 and S715.

At step S711, local signal characteristics of $S \times T$ pixels in the HDR image is analyzed. S and T are positive integers, and $S \leq N$ and $T \leq M$.

At step S713, one or more up-sampling parameters are selected according to the local signal characteristics. For example, the local signal characteristics may include a contrast ratio of the HDR image.

At step S715, the HDR image is up-sampled by using the selected one or more up-sampling parameters.

At step S720, bit conversion is performed on the up-sampled HDR image to obtain a LDR image having a size of $P \times Q$ pixels and a bit-depth of m bits. This step is

At step S730, the LDR image is displayed on the LDR screen,

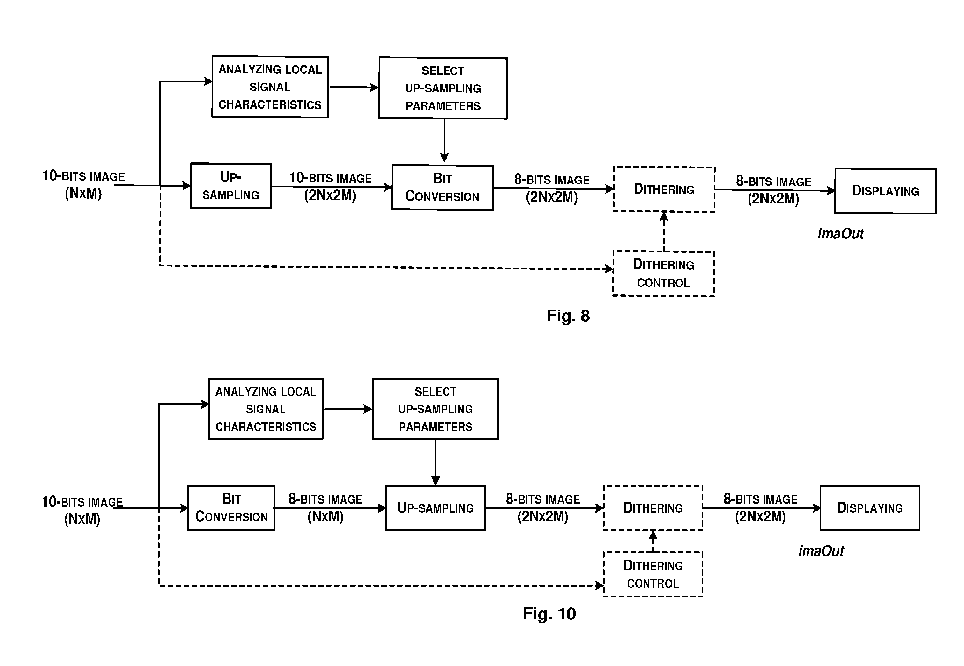

Fig. 8 schematically illustrates an example procedure of the method 700 according to the third embodiment of the present disclosure.

In this example, although the HDR image and the large LDR screen are described as a 10-bits image having $N \times M$ pixels and a 8-bits screen having 2Nx2M pixels, respectively, it will be appreciated that the present disclosure is not limited to this and various other formats of images and screens are applicable.

As shown in Fig. 8, the 10-bits image having $N \times M$ pixels is firstly up-sampled to a 10-bits image having 2Nx2M pixels. The up-sampling is controlled by locally adapting up-sampling parameters. To be specific, this is done by analyzing local signal characteristics of S×T pixels (S and T are positive integers, and S≤N and T≤M) in the HDR image, selecting one or more up-sampling parameters according to the local signal characteristics, and performing the up-sampling based on the selected on or more up-sampling parameters.

Then, the 10-bits image having 2Nx2M pixels is bit-converted to a 8-bits image having 2Nx2M pixels. The 8-bits image having 2Nx2M pixels is finally displayed on the LDR screen.

Optionally, before displaying, the 8-bits image having 2Nx2M pixels may be dithered by considering the original image, i.e., the 10-bits image having N×M pixels.

After comparing Fig. 8 with Fig. 4, it can be seen that the method 700 differs from the method 300 in that the method 700 compulsorily adapts the up-sampling, while it is only optional in the method 300, and that the method 300 compulsorily applies the dithering, while it is only optional in the method 700. In this case, the detailed implementations of the method 300 described with reference to Fig 3 and Fig. 4 will be similarly applied to the method 700.

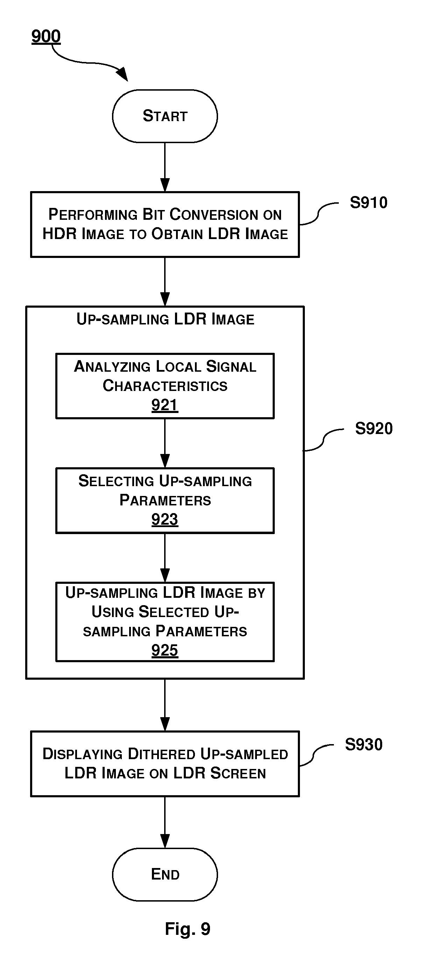

Fig. 9 shows a flowchart of a method 900 for displaying a HDR image on a large LDR screen according to a fourth embodiment of the present disclosure. The HDR image has a size of N×M pixels and a bit-depth of n bits. The LDR screen has a size of P ×Q pixels and a bit-depth of m bits. All of N, M, P, Q, n, and m are positive integers, and P>N, Q≥M, and n>m.

At step S91 0, bit conversion is performed on the HDR image to obtain a LDR image having a size of N×M pixels and a bit-depth of m bits.

At step S920, the LDR image is up-sampled to obtain an up-sampled LDR image having a size of P×Q pixels and a bit-depth of m bits. This step is implemented by three sub-steps, i.e., step S921, S923 and S925.

At step S921, local signal characteristics of S×T pixels in the HDR image is analyzed. S and T are positive integers, and S≤N and T≤M.

At step S923, one or more up-sampling parameters are selected according to the local signal characteristics. For example, the local signal characteristics may include a contrast ratio of the HDR image.

At step S925, the LDR image is up-sampled by using the selected one or more up-sampling parameters.

At step S930, the up-sampled LDR image is displayed on the LDR screen,

The method 900 mainly differs from the method 700 in that the method 900 firstly performs the bit conversion and then the up-sampling, while it is firstly the up-sampling and then the bit conversion in the method 700. That is, step S910 corresponds to step S720, the step S920 corresponds to the step S710, and step 930 corresponds to steps S730. In this case, the detailed implementations of steps S910-930 will be similar to those depicted with reference to Fig. 7, and thus will be omitted here for the sake of brevity.

Fig. 10 schematically illustrates an example procedure of the method 900 according to the fourth embodiment of the present disclosure.

In this example, although the HDR image and the large LDR screen are described as a 10-bits image having N×M pixels and a 8-bits screen having 2Nx2M pixels, respectively, it will be appreciated that the present disclosure is not limited to this and various other formats of images and screens are applicable.

As shown in Fig. 10, the 10-bits image having N×M pixels is firstly bit-converted to a 8-bits image having N×M pixels and then up-sampled to a 8-bits image having 2Nx2M pixels. The up-sampling is controlled by locally adapting up-sampling parameters. To be specific, this is done by analyzing local signal characteristics of S×T pixels (S and T are positive integers, and S≤N and T≤M) in the HDR image, selecting one or more up-sampling parameters according to the local signal characteristics, and performing the up-sampling based on the selected on or more up-sampling parameters.

Then, the 8-bits image having 2Nx2M pixels is finally displayed on the LDR screen.

Optionally, before displaying, the 8-bits image having 2Nx2M pixels may be dithered by considering the original image, i.e., the 10-bits image having N×M pixels.

Fig. 10 differs from Fig. 8 mainly in swapping bit conversion with up-sampling. In this case, the detailed implementations of the method 700 described with reference to Fig 7 and Fig. 8 will be similarly applied to the method 900.

By using the methods according to the first to fourth embodiments of the present disclosure, the present disclosure allows to display a high bit-depth image on a low bit-depth screen, thereby enabling displaying HDR images on LDR screens.

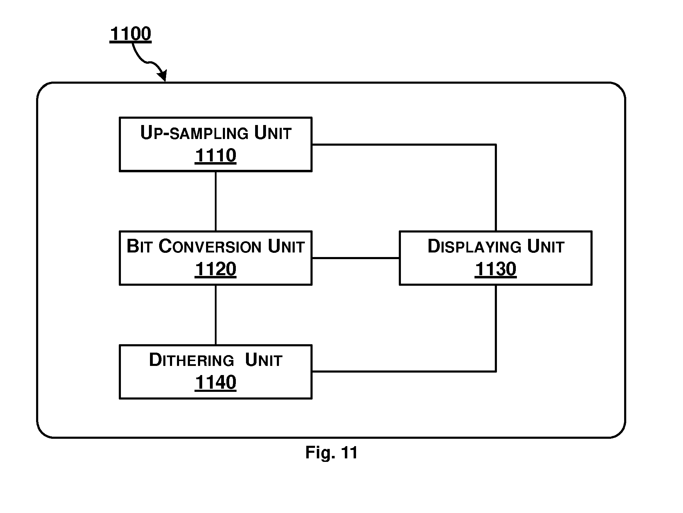

Fig. 11 is a schematic block diagram of an apparatus 1100 for displaying a HDR image on a large LDR screen according to some embodiments of the present disclosure.

The apparatus 1100 is implemented to perform the herein described methods, e.g., the methods 300, 500, 700, or 900. The apparatus 1100 may be implemented in a display such as a Liquid Crystal Display (LCD) or Light Emitting Diode (LED) display, a set-top box, or any other appropriate video decoder, or post-processing devices.

Referring to Fig. 11, the arrangement 1100 may include an up-sampling unit 1110, a bit conversion unit 1120, and a displaying unit 1130.

According to a fifth embodiment of the present disclosure, the apparatus 1100 filter further includes a dithering unit 1140. In this embodiment, the up-sampling unit 1110 is configured to up-sample the HDR image to obtain an up-sampled HDR image having a size of P×Q pixels and a bit-depth of n bits. The bit conversion unit 1120 is configured to perform bit conversion on the up-sampled HDR image to obtain a LDR image having a size of P×Q pixels and a bit-depth of m bits. The dithering unit 1140 is configured to dither the LDR image based on the HDR image having a size of N×M pixels and a bit-depth of n bits. The displaying unit 1130 is configured to display the dithered LDR image on the LDR screen.

According to a sixth embodiment of the present disclosure, the apparatus 1100 filter further includes a dithering unit 1140. In this embodiment, the bit conversion unit 1120 is configured to perform bit conversion on the HDR image to obtain a LDR image having a size of N×M pixels and a bit-depth of m bits. The up-sampling unit is configured to up-sample the LDR image to obtain an up-sampled LDR image having a size of P×Q pixels and a bit-depth of m bits. The dithering unit 1140 is configured to dither the up-sampled LDR image based on the HDR image having a size of N×M pixels and a bit-depth of n bits. The displaying unit 1130 is configured to display the dithered up-sampled LDR image on the LDR screen.

According to a seventh embodiment of the present disclosure, the up-sampling unit 1110 is configured to up-sample the HDR image to obtain an up-sampled HDR image having a size of P×Q pixels and a bit-depth of n bits. To be specific, the up-sampling unit 1110 is configured to: analyze local signal characteristics of S×T pixels in the HDR image, S and T being positive integers, and S≤N and T≤M; select one or more up-sampling parameters according to the local signal characteristics; and up-sample the HDR image by using the selected one or more up-sampling parameters. The bit conversion unit 1120 is configured to perform bit conversion on the up-sampled HDR image to obtain a LDR image having a size of P×Q pixels and a bit-depth of m bits. The displaying unit 1130 is configured to display the LDR image on the LDR screen,

According to a eighth embodiment of the present disclosure, the bit conversion unit 1120 is configured to perform bit conversion on the HDR image to obtain a LDR image having a size of N×M pixels and a bit-depth of m bits. The up-sampling unit 1110 is configured to up-sample the LDR image to obtain an up-sampled LDR image having a size of P×Q pixels and a bit-depth of m bits. To be specific, the up-sampling unit 1110 is configured to: analyze local signal characteristics of S×T pixels in the HDR image, S and T being positive integers, and S≤N and T≤M; select one or more up-sampling parameters according to the local signal characteristics; and up-sample the LDR image by using the selected one or more up-sampling parameters. The displaying unit 1130 is configured to display the up-sampled LDR image on the LDR screen,

According to either of the fifth to the eighth embodiments, the bit conversion unit 1120 may be configured to perform the bit conversion by using a tone mapping algorithm such as any appropriate globally or locally adapted tone mapping algorithms.

According to either of the fifth to the eighth embodiments, the local signal characteristics may include a contrast ratio of the HDR image.

According to either of the fifth to the eighth embodiments, the up-sampling unit 1110 may be configured to perform the up-sampling by an up-sampling filter or a sharpen filter.

The present disclosure is described above with reference to the embodiments thereof. However, those embodiments are provided just for illustrative purpose, rather than limiting the present disclosure. The scope of the disclosure is defined by the attached claims as well as equivalents thereof. Those skilled in the art can make various alternations and modifications without departing from the scope of the disclosure, which all fall into the scope of the disclosure.

**Claims**

**1.** A method for displaying a High Dynamic Range (HDR) image on a Low Dynamic Range (LDR) screen, the HDR image having a size of N×M pixels and a bit-depth of n bits, the LDR screen having a size of P×Q pixels and a bit-depth of m bits, all of N, M, P, Q, n, and m being positive integers, and P>N, Q≥M, and n>m, the method comprising:

performing bit conversion on the HDR image to obtain a LDR image having a size of N×M pixels and a bit-depth of m bits;
up-sampling the LDR image to obtain an up-sampled LDR image having a size of P×Q pixels and a bit-depth of m bits;
dithering the up-sampled LDR image based on the HDR image having a size of Nx M pixels and a bit-depth of n bits; and
displaying the dithered up-sampled LDR image on the LDR screen.

**2.** The method according to claim 1, wherein the up-sampling comprises:

analyzing local signal characteristics of S×T pixels in the HDR image, S and T being positive integers, and S≤N and T≤M;
selecting one or more up-sampling parameters according to the local signal characteristics; and
performing the up-sampling by using the selected one or more up-sampling parameters.

3. The method according to claim 1 or 2, wherein the bit conversion is performed by using a tone mapping algorithm.

4. The method according to any of claims 1 to 3, wherein the local signal characteristics include a contrast ratio of the HDR image.

5. The method according to any of claims 1 to 4, wherein the up-sampling is performed by an up-sampling filter or a sharpen filter.

6. An apparatus for displaying a High Dynamic Range (HDR) image on a Low Dynamic Range (LDR) screen, the HDR image having a size of N×M pixels and a bit-depth of n bits, the LDR screen having a size of P×Q pixels and a bit-depth of m bits, all of N, M, P, Q, n, and m being positive integers, and P>N, Q≥M, and n>m, the apparatus comprising:

a bit conversion unit configured to perform bit conversion on the HDR image to obtain a LDR image having a size of N×M pixels and a bit-depth of m bits;
an up-sampling unit configured to up-sample the LDR image to obtain an up-sampled LDR image having a size of P×Q pixels and a bit-depth of m bits;
a dithering unit configured to dither the up-sampled LDR image based on the HDR image having a size of N×M pixels and a bit-depth of n bits; and
a displaying unit configured to display the dithered up-sampled LDR image on the LDR screen.

7. The apparatus according to claim 6, wherein the up-sampling unit is configured to:

analyze local signal characteristics of S×T pixels in the HDR image, S and T being positive integers, and S≤N and T≤M;
select one or more up-sampling parameters according to the local signal characteristics; and
performing the up-sampling by using the selected one or more up-sampling parameters.

8. The apparatus according to claim 6 or 7, wherein the bit conversion unit is configured to perform the bit conversion by using a tone mapping algorithm.

9. The apparatus according to any of claims 6 to 8, wherein the local signal characteristics include a contrast ratio of the HDR image.

10. The apparatus according to any of claims 6 to 9, wherein the up-sampling unit is configured to perform the up-sampling by an up-sampling filter or a sharpen filter.

11. Computer program product downloadable from a communication network and/or recorded on a medium readable by computer and/or executable by a processor, comprising program code instructions for implementing the steps of a method according to at least one of claims 1 to 5.

12. Non-transitory computer-readable medium comprising a computer program product recorded thereon and capable of being run by a processor, including program code instructions for implementing the steps of a method according to at least one of claims 1 to 5.

Fig. 1

Fig. 2

300

START

UP-SAMPLING HDR IMAGE — S310

PERFORMING BIT CONVERSION ON
UP-SAMPLED HDR IMAGE TO OBTAIN
LDR IMAGE — S320

DITHERING LDR IMAGE BASED ON
HDR IMAGE — S330

DISPLAYING DITHERED LDR IMAGE
ON LDR SCREEN — S340

END

Fig. 3

ANALYZING LOCAL SIGNAL CHARACTERISTICS

SELECT UP-SAMPLING PARAMETERS

10-BITS IMAGE (NxM) → UP-SAMPLING → 10-BITS IMAGE (2Nx2M) → BIT CONVERSION → 8-BITS IMAGE (2Nx2M) → DITHERING → 8-BITS IMAGE (2Nx2M) → DISPLAYING

*imaOut*

DITHERING CONTROL

**Fig. 4**

ANALYZING LOCAL SIGNAL CHARACTERISTICS

SELECT UP-SAMPLING PARAMETERS

10-BITS IMAGE (NxM) → BIT CONVERSION → 8-BITS IMAGE (NxM) → UP-SAMPLING → 8-BITS IMAGE (2Nx2M) → DITHERING → 8-BITS IMAGE (2Nx2M) → DISPLAYING

*imaOut*

DITHERING CONTROL

**Fig. 6**

500

START

PERFORMING BIT CONVERSION ON
HDR IMAGE TO OBTAIN LDR IMAGE — S510

UP-SAMPLING LDR IMAGE — S520

DITHERING UP-SAMPLED LDR IMAGE
BASED ON HDR IMAGE — S530

DISPLAYING DITHERED UP-SAMPLED
LDR IMAGE ON LDR SCREEN — S540

END

Fig. 5

<u>700</u>

```
        ( START )
            │
            ▼
┌───────────────────────────────┐
│      UP-SAMPLING HDR IMAGE     │
│  ┌─────────────────────────┐   │
│  │ ANALYZING LOCAL SIGNAL   │   │
│  │    CHARACTERISTICS       │   │
│  │         711              │   │
│  └─────────────────────────┘   │      ⟋ S710
│             │                   │
│             ▼                   │
│  ┌─────────────────────────┐   │
│  │  SELECTING UP-SAMPLING   │   │
│  │      PARAMETERS          │   │
│  │         713              │   │
│  └─────────────────────────┘   │
│             │                   │
│             ▼                   │
│  ┌─────────────────────────┐   │
│  │ UP-SAMPLING HDR IMAGE BY │   │
│  │   USING SELECTED UP-     │   │
│  │   SAMPLING PARAMETERS    │   │
│  │         715              │   │
│  └─────────────────────────┘   │
└───────────────────────────────┘
            │
            ▼
┌───────────────────────────────┐        ⟋ S720
│ PERFORMING BIT CONVERSION ON   │
│ UP-SAMPLED HDR IMAGE TO OBTAIN │
│           LDR IMAGE            │
└───────────────────────────────┘
            │
            ▼
┌───────────────────────────────┐        ⟋ S730
│  DISPLAYING LDR IMAGE ON LDR   │
│           SCREEN               │
└───────────────────────────────┘
            │
            ▼
         (  END  )
```

**Fig. 7**

```
                    ANALYZING LOCAL              SELECT
                        SIGNAL          →      UP-SAMPLING
                    CHARACTERISTICS             PARAMETERS
```

10-BITS IMAGE
(NxM) → UP-SAMPLING → 10-BITS IMAGE (2Nx2M) → BIT CONVERSION → 8-BITS IMAGE (2Nx2M) → DITHERING → 8-BITS IMAGE (2Nx2M) → DISPLAYING

imaOut

DITHERING CONTROL

**Fig. 8**

```
                    ANALYZING LOCAL              SELECT
                        SIGNAL          →      UP-SAMPLING
                    CHARACTERISTICS             PARAMETERS
```

10-BITS IMAGE
(NxM) → BIT CONVERSION → 8-BITS IMAGE (NxM) → UP-SAMPLING → 8-BITS IMAGE (2Nx2M) → DITHERING → 8-BITS IMAGE (2Nx2M) → DISPLAYING

imaOut

DITHERING CONTROL

**Fig. 10**

<u>900</u>

```
                    ┌──────────┐
                    │   START  │
                    └──────────┘
                         │
                         ▼
        ┌─────────────────────────────────┐        S910
        │  PERFORMING BIT CONVERSION ON    │  ⟋
        │  HDR IMAGE TO OBTAIN LDR IMAGE   │
        └─────────────────────────────────┘
                         │
                         ▼
    ┌─────────────────────────────────────────┐
    │        UP-SAMPLING LDR IMAGE             │
    │                                          │
    │   ┌───────────────────────────────┐      │
    │   │  ANALYZING LOCAL SIGNAL       │      │
    │   │  CHARACTERISTICS              │      │
    │   │  921                          │      │
    │   └───────────────────────────────┘      │        S920
    │                 │                        │  ⟋
    │                 ▼                        │
    │   ┌───────────────────────────────┐      │
    │   │  SELECTING UP-SAMPLING        │      │
    │   │  PARAMETERS                   │      │
    │   │  923                          │      │
    │   └───────────────────────────────┘      │
    │                 │                        │
    │                 ▼                        │
    │   ┌───────────────────────────────┐      │
    │   │  UP-SAMPLING LDR IMAGE BY     │      │
    │   │  USING SELECTED UP-           │      │
    │   │  SAMPLING PARAMETERS          │      │
    │   │  925                          │      │
    │   └───────────────────────────────┘      │
    └─────────────────────────────────────────┘
                         │
                         ▼
        ┌─────────────────────────────────┐        S930
        │  DISPLAYING DITHERED UP-SAMPLED  │  ⟋
        │  LDR IMAGE ON LDR SCREEN         │
        └─────────────────────────────────┘
                         │
                         ▼
                    ┌──────────┐
                    │   END    │
                    └──────────┘
```

**Fig. 9**

<u>1100</u>

UP-SAMPLING UNIT
<u>1110</u>

BIT CONVERSION UNIT
<u>1120</u>

DISPLAYING UNIT
<u>1130</u>

DITHERING UNIT
<u>1140</u>

**Fig. 11**

Europäisches
Patentamt

European
Patent Office

Office européen
des brevets

# EUROPEAN SEARCH REPORT

Application Number

EP 14 30 5961

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/057970 A1 (INOKAWA HIROYUKI [JP]) 10 March 2011 (2011-03-10) * paragraph [0027] - paragraph [0041]; figures 1,3,4 * ----- | 1,3,6,8, 11,12 | INV. G09G3/20 ADD. G06T5/00 G09G5/00 |
| X | WO 2011/097060 A2 (MICROSOFT CORP [US]) 11 August 2011 (2011-08-11) * paragraph [0095] - paragraphs [0104], [0109], [0110], [0128] - [0130]; figures 6,7 * ----- | 1-12 | |

TECHNICAL FIELDS
SEARCHED (IPC)

G09G
G06T
H04N

The present search report has been drawn up for all claims

| Place of search | Date of completion of the search | Examiner |
|---|---|---|
| Munich | 16 September 2014 | Adarska, Veneta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 5961

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2014

| Patent document cited in search report | | Publication date | Patent family member(s) | | Publication date |
|---|---|---|---|---|---|
| US 2011057970 | A1 | 10-03-2011 | CN | 102024406 A | 20-04-2011 |
| | | | JP | 2011061501 A | 24-03-2011 |
| | | | US | 2011057970 A1 | 10-03-2011 |
| WO 2011097060 | A2 | 11-08-2011 | AU | 2011213266 A1 | 09-08-2012 |
| | | | CA | 2786456 A1 | 11-08-2011 |
| | | | CN | 102741883 A | 17-10-2012 |
| | | | EP | 2531978 A2 | 12-12-2012 |
| | | | JP | 2013519157 A | 23-05-2013 |
| | | | KR | 20120112709 A | 11-10-2012 |
| | | | TW | 201142754 A | 01-12-2011 |
| | | | US | 2011188744 A1 | 04-08-2011 |
| | | | US | 2014079335 A1 | 20-03-2014 |
| | | | WO | 2011097060 A2 | 11-08-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.KOPF ; M.F.COHEN ; D.LISCHINSKI ; M.UYT-TENDAELE.** Joint BilateralUpsampling. *ACM Transactions on Graphics (Proceedings of SIGGRAPH 2007),* August 2007